# EUROPÄISCHE PATENTANMELDUNG

(11) **EP 4 825 512 A1**
(43) Veröffentlichungstag der Anmeldung: **21.10.2026**
(21) Anmeldenummer: 25170984.6
(22) Anmeldetag: 16.04.2025
(51) Int. Cl.: B23F 21/22

(54) **STABMESSER ZUR FERTIGUNG EINER KEGELRADVERZAHNUNG**

(71) Anmelder: Klingelnberg GmbH, 42499 Hückeswagen (DE)
(72) Erfinder: Herzhoff, Stefan, 42499 Hückeswagen (DE); Ribbeck, Karl-Martin, 42897 Remscheid (DE); Reuner, Dieter, 51688 Wipperfürth (DE)
(74) Vertreter: Janke Scholl Patentanwälte PartG mbB

(57) **Zusammenfassung**

Stabmesser zur Fertigung einer Kegelradverzahnung, mit einer Spanfläche (4), mit einer Freifläche (6), mit einer geschliffenen Spanflächenfacette (8) mit einer geschliffenen Freiflächenfacette (10) und mit einer Schneide (12), wobei die Spanfläche (4) an die Spanflächenfacette (8) angrenzt und die Spanflächenfacette (8) relativ zur Spanfläche (4) geneigt ist, wobei die Freifläche (6) an die Freiflächenfacette (10) angrenzt und wobei eine Spanflächenfase (14) vorgesehen ist, die mit einer ersten Seite (16) an die Spanflächenfacette (8) angrenzt und die auf einer der Spanflächenfacette (8) abgewandten zweiten Seite (18) die Schneide (12) definiert.

## Beschreibung

Die vorliegende Erfindung betrifft ein Stabmesser zur Fertigung einer Kegelradverzahnung, mit einer Spanfläche, mit einer Freifläche, mit einer geschliffenen Spanflächenfacette, mit einer geschliffenen Freiflächenfacette und mit einer Schneide, wobei die Spanfläche an die Spanflächenfacette angrenzt und wobei die Freifläche an die Freiflächenfacette angrenzt. Weiter betrifft die Erfindung einen Messerkopf zur Fertigung einer Kegelradverzahnung, ein Verfahren zur Herstellung einer Kegelradverzahnung und ein Verfahren zum Schleifen eines Stabmessers.

Stabmesser dienen zur spanabhebenden Weichbearbeitung von Kegelradrohlingen mit geometrisch definierter Schneide. Die Stabmesser werden hierzu üblicherweise in einen Messerkopf eingesetzt und werden zum kontinuierlichen oder einzelteilenden Kegelradfräsen verwendet.

Das Dokument DE 103 24 432 B4 zeigt ein Verfahren zur Herstellung eines profilgeschärften Stabmessers zur Herstellung von Kegel- und Hypoidrädern, bei dem der Schleifprozess zur Herstellung des Stabmessers vereinfacht wird. Dies wird gemäß DE 103 24 432 B4 erreicht, indem die Freifläche und/oder die Spanfläche des Stabmessers mit einer Facette versehen werden, die den gleichen Winkel wie die zugeordnete Freifläche und/oder Spanfläche hat. Dabei wird das Stabmesser nach dem Schleifen der Freifläche und/oder der Spanfläche nicht neu positioniert, sondern die Facette wird direkt im gleichen Winkel geschliffen.

Untersuchungen der Anmelderin unter Verwendung der aus DE 103 24 432 B4 bekannten Stabmesser haben gezeigt, dass, je nach Geometrie, Prozess und Verschleißzustand der zum Schleifen der Stabmesser verwendeten Schleifscheibe, eine mehr oder weniger große Schartigkeit der an dem Stabmesser erzeugten Schneide bzw. Schneidkante entsteht. Dadurch werden Ausbrüche der Schneide bzw. Schneidkante begünstigt und die Standmenge verringert.

Beim Einsatz der Stabmesser zur spanabhebenden Erzeugung von Kegelradverzahnungen werden L- bis U-förmige Mehrflankenspäne erzeugt, die in der Zahnlücke viel Raum einnehmen und die in ungünstigen Fällen zu Kratzern und Spanaufschweißungen auf den Zahnflanken führen. Zudem entstehen durch die L- bis U-förmigen Mehrflankenspäne große mechanische und thermische Belastungen der Stabmesser, so dass diese schnell verschleißen.

Vor diesem Hintergrund liegt der Erfindung die technische Problemstellung zugrunde, ein verbessertes Stabmesser anzugeben. Weiter sollen ein Messkopf zur Fertigung einer Kegelradverzahnung, ein Verfahren zur Herstellung einer Kegelradverzahnung und ein Verfahren zum Schleifen eines Stabmessers angegeben werden.

Die voranstehend beschriebene, technische Problemstellung wird jeweils mit den Merkmalen der unabhängigen Ansprüche gelöst. Weitere Ausgestaltungen der Erfindung ergeben sich aus den abhängigen Ansprüchen und der nachstehenden Beschreibung.

Gemäß einem ersten Aspekt betrifft die Erfindung ein Stabmesser zur Fertigung einer Kegelradverzahnung, mit einer Spanfläche, mit einer Freifläche, mit einer geschliffenen Spanflächenfacette, mit einer geschliffenen Freiflächenfacette und mit einer Schneide, wobei die Spanfläche an die Spanflächenfacette angrenzt und wobei die Freifläche an die Freiflächenfacette angrenzt. Das Stabmesser zeichnet sich dadurch aus, dass eine Spanflächenfase vorgesehen ist, die mit einer ersten Seite an die Spanflächenfacette angrenzt und die auf einer der Spanflächenfacette abgewandten zweiten Seite die Schneide definiert, und/oder dass eine Freiflächenfase vorgesehen ist, die mit einer ersten Seite an die Freiflächenfacette angrenzt und die auf einer der Freiflächenfacette abgewandten zweiten Seite die Schneide definiert.

Die zusätzliche Spanflächenfase und/oder die zusätzliche Freiflächenfase haben den Vorteil, dass beim Schleifen des Stabmessers eine geringere Schartigkeit der Schneidkante und in der Folge eine stabilere Schneidkante mit besserer Standmenge erzeugt wird. Die zusätzliche Spanflächenfase und/oder die zusätzliche Freiflächenfase können als Spanbrecher dienen, um die Bildung großer Mehrflankenspäne zu vermeiden bzw. diese beim spanabhebenden Bearbeiten des Kegelrads in mehrere einzelne Späne zu teilen. So können Kratzer auf den zu fertigenden Zahnflanken des betreffenden Kegelrads vermieden werden und die Belastung des betreffenden Stabmessers kann reduziert werden.

Die Spanfläche und die Spanflächenfacette können durch eine nicht tangentenstetige Unstetigkeit, wie eine Kante, einen Absatz oder dergleichen, voneinander abgegrenzt sein bzw. in dieser nicht tangentenstetigen Unstetigkeit zusammenstoßen.

Die Spanflächenfacette und die Spanflächenfase können durch eine nicht tangentenstetige Unstetigkeit, wie eine Kante, einen Absatz oder dergleichen, voneinander abgegrenzt sein bzw. in dieser nicht tangentenstetigen Unstetigkeit zusammenstoßen.

Die Freifläche und die Freiflächenfacette können durch eine nicht tangentenstetige Unstetigkeit, wie eine Kante, einen Absatz oder dergleichen, voneinander abgegrenzt sein bzw. in dieser nicht tangentenstetigen Unstetigkeit zusammenstoßen.

Die Freiflächenfacette und die Freiflächenfase können durch eine nicht tangentenstetige Unstetigkeit, wie eine Kante, einen Absatz oder dergleichen, voneinander abgegrenzt sein bzw. in dieser nicht tangentenstetigen Unstetigkeit zusammenstoßen.

Das Stabmesser kann im Wesentlichen aus einem Hartmetall oder einem Schnellarbeitsstahl bestehen, wobei das Stabmesser mit einer Verschleißschutzbeschichtung beschichtet sein kann. Beschichtungen können z.B. im CVD- oder PVD-Verfahren erzeugt worden sein. Die Beschichtungen können z.B. Titannitrid (TiN), Titanaluminiumnitrid (TiAIN), Chromnitrid (CrN), Titancarbonitrid (TiCN) oder dergleichen aufweisen.

Die Schneide kann, z.B. im Kopfbereich und/oder im Bereich der Hauptschneide und/oder im Bereich der Nebenschneide, eine Schneidkantenverrundung aufweisen. Das Prinzip der Schneidkantenverrundung ist im Stand der Technik bekannt.

Es kann vorgesehen sein, dass die Spanflächenfase in einer Richtung senkrecht zur Schneide betrachtet, zumindest abschnittsweise eine geringere Breite aufweist als die Spanflächenfacette und/oder die Spanflächenfase eine Breite von mehr als 50 Mikrometer und weniger als 200 Mikrometer aufweist und/oder die Spanflächenfase entlang der Schneide betrachtet eine nicht konstante Breite aufweist. Die Breite der Spanflächenfase kann daher insbesondere derart an das jeweilige Verzahnverfahren bzw. die während des Verzahnens entstehenden Spandicken und Spangeometrien angepasst sein, dass die Spanflächenfase z.B. als Spanbrecher dienen kann.

Gemäß einer Ausgestaltung des Stabmessers kann vorgesehen sein, dass die Freiflächenfase in einer Richtung senkrecht zur Schneide betrachtet, zumindest abschnittsweise eine geringere Breite aufweist als die Freiflächenfacette und/oder die Freiflächenfase eine Breite von mehr als 50 Mikrometer und weniger als 200 Mikrometer aufweist und/oder die Freiflächenfase entlang der Schneide eine nicht konstante Breite aufweist.

Es kann vorgesehen sein, dass eine Neigung der Spanflächenfase relativ zur Spanfläche durch einen relativen Spanflächenfasenneigungswinkel definiert ist, wobei der Spanflächenfasenneigungswinkel einen Betrag aufweist, ausgewählt aus einem Bereich größer oder gleich 10° und kleiner oder gleich 30° und/oder wobei der Spanflächenfasenneigungswinkel entlang der Schneide betrachtet, nicht konstant ist. Der Winkel der Spanflächenfase kann daher insbesondere derart an das jeweilige Verzahnverfahren bzw. die während des Verzahnens entstehenden Spandicken und Spangeometrien angepasst sein, dass die Spanflächenfase z.B. als Spanbrecher dienen kann.

Gemäß einer Ausgestaltung des Stabmessers kann vorgesehen sein, dass eine Neigung der Freiflächenfase relativ zur Freifläche durch einen relativen Freiflächenfasenneigungswinkel definiert ist, wobei der Freiflächenfasenneigungswinkel einen Betrag aufweist, ausgewählt aus einem Bereich größer oder gleich 10° und kleiner oder gleich 30° und/oder wobei der Freiflächenfasenneigungswinkel entlang der Schneide betrachtet, nicht konstant ist.

Es kann vorgesehen sein, dass die Spanflächenfase in einem Querschnitt betrachtet, zumindest abschnittsweise geradlinig ist.

Alternativ oder ergänzend kann vorgesehen sein, dass die Spanflächenfase in einem Querschnitt betrachtet, zumindest abschnittsweise konkav ist.

Alternativ oder ergänzend kann vorgesehen sein, dass die Freiflächenfase in einem Querschnitt betrachtet, zumindest abschnittsweise geradlinig ist.

Alternativ oder ergänzend kann vorgesehen sein, dass die Freiflächenfase in einem Querschnitt betrachtet, zumindest abschnittsweise konkav ist.

Gemäß einer Ausgestaltung des Stabmessers kann vorgesehen sein, dass die Spanflächenfacette in einem Querschnitt betrachtet, zumindest abschnittsweise geradlinig ist.

Alternativ oder ergänzend kann vorgesehen sein, dass die Spanflächenfacette in einem Querschnitt betrachtet, zumindest abschnittsweise konkav ist

Alternativ oder ergänzend kann vorgesehen sein, dass die Freiflächenfacette in einem Querschnitt betrachtet, zumindest abschnittsweise geradlinig ist.

Alternativ oder ergänzend kann vorgesehen sein, dass die Freiflächenfacette in einem Querschnitt betrachtet, zumindest abschnittsweise konkav ist.

Üblicherweise werden Winkel z.B. zwischen zwei zueinander geneigten, ebenen Flächen definiert, um die relative Orientierung dieser Flächen zueinander zu beschreiben. Im vorliegenden Fall können der Spanflächenfasenneigungswinkel und/oder Freiflächenfasenneigungswinkel jedoch auch für den Fall zur Beschreibung der relativen Orientierung der Spanflächenfase zur Spanfläche bzw. der Freiflächenfase zur Freifläche verwendet werden, dass die Freiflächenfase bzw. die Spanflächenfase konkav ausgeführt sind. Denn die Krümmung der konkaven Spanflächenfase bzw. der Freiflächenfase ist in der Praxis derart gering, dass die Spanflächenfase bzw. die Freiflächenfase im Querschnitt betrachtet im Wesentlichen geradlinig erscheinen. So kann im Querschnitt betrachtet eine Hilfsebene durch die seitlichen Enden der Spanflächenfase bzw. Freiflächenfase gelegt werden, um den Spanflächenfasenneigungswinkel und/oder Freiflächenfasenneigungswinkel zu messen.

Gemäß einem zweiten Aspekt betrifft die Erfindung einen Messerkopf zur Fertigung einer Kegelradverzahnung, mit einem Grundkörper, der eine Mehrzahl von Messerschächten aufweist, mit einer Mehrzahl von Stabmessern, wobei jedes der Stabmesser jeweils in einem zugeordneten Messerschacht sitzt. Der Messerkopf zeichnet sich dadurch aus, dass die Stabmesser gemäß einem der voranstehenden Ansprüche ausgebildet sind.

Gemäß einem dritten Aspekt betrifft die Erfindung ein Verfahren zur Herstellung einer Kegelradverzahnung durch spanabhebende Bearbeitung der Kegelradverzahnung, wobei ein erfindungsgemäßer Messerkopf verwendet wird.

Gemäß einem vierten Aspekt betrifft die Erfindung ein Verfahren zum Schleifen eines Stabmessers, mit den Verfahrensschritten: Schleifen einer Spanfläche des Stabmessers; Schleifen einer Freifläche des Stabmessers; Schleifen einer Spanflächenfacette des Stabmessers; Schleifen einer Freiflächenfacette des Stabmessers, wobei die Spanfläche an die Spanflächenfacette angrenzt und wobei die Freifläche an die Freiflächenfacette angrenzt. Das Verfahren zeichnet sich aus durch ein Schleifen einer Spanflächenfase, die an einer ersten Seite an die Spanflächenfacette angrenzt und die auf einer der Spanflächenfacette abgewandten zweiten Seite die Schneide definiert, und/oder durch ein Schleifen einer Freiflächenfase, die an einer ersten Seite an die Freiflächenfacette angrenzt und die auf einer der Freiflächenfacette abgewandten zweiten Seite die Schneide definiert.

Nachfolgend wird die Erfindung anhand von Zeichnungen näher beschreiben. Es zeigen jeweils schematisch:
- Fig. 1: einen Ausschnitt eines erfindungsgemäßen Stabmessers in einer perspektivischen Ansicht von oben;
- Fig. 2: das Stabmesser aus Fig. 1 in einer teilweisen Schnittdarstellung gemäß dem Schnitt II - II aus Fig. 1;
- Fig. 3: einen Ausschnitt eines zweiten erfindungsgemäßen Stabmessers in einer perspektivischen Ansicht von oben;
- Fig. 4: das Stabmesser aus Fig. 4 in drei teilweisen Schnittdarstellungen gemäß Schnitt IV.1 - IV.1, Schnitt IV.2 - IV.2 und Schnitt IV.3 - IV.3 aus Fig. 3;
- Fig. 5: einen Ausschnitt eines dritten erfindungsgemäßen Stabmessers in einer perspektivischen Ansicht von oben;
- Fig. 6: das Stabmesser aus Fig. 5 in einer teilweisen Schnittdarstellung gemäß dem Schnitt VI - VI aus Fig. 5;
- Fig. 7: einen Ausschnitt eines vierten erfindungsgemäßen Stabmessers in einer perspektivischen Ansicht von oben;
- Fig. 8: das Stabmesser aus Fig. 7 in einer vergrößerten Darstellung;
- Fig. 9: einen Messerkopf;
- Fig. 10: ein Kegelrad;
- Fig. 11: einen Verfahrensschritt;
- Fig. 12: Verfahrensschritte.

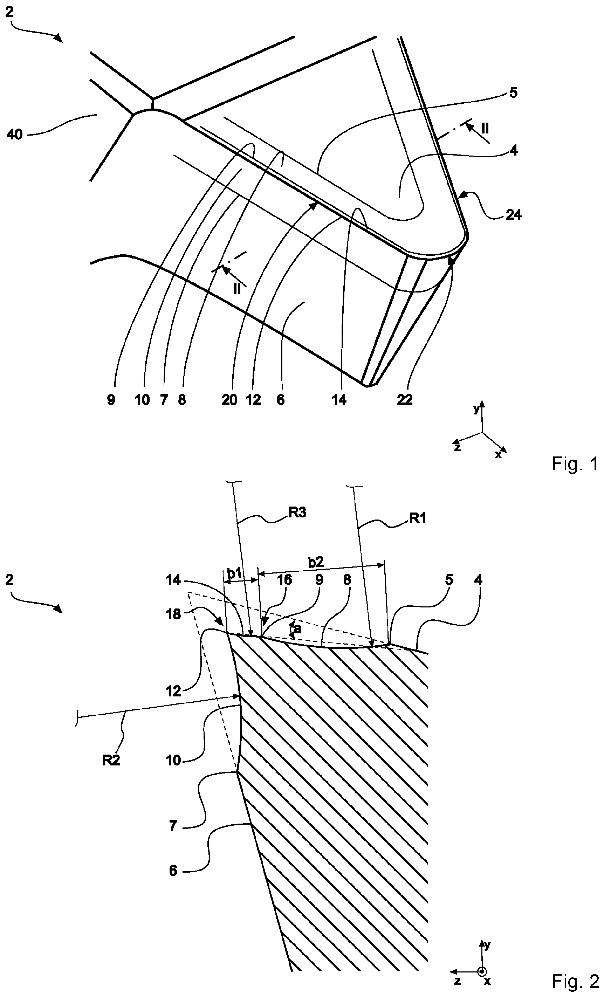

Fig. 1 zeigt einen Ausschnitt eines erfindungsgemäßen Stabmessers 2 zur Fertigung einer Kegelradverzahnung. Zur besseren Nachvollziehbarkeit der nachstehenden Ausführungen wird ein kartesisches Koordinatensystem x, y, z eingeführt. Die in Fig. 1 gezeigte Schnittlinie II - II befindet sich in einer Schnittebene, die parallel zu einer von den Koordinatenachsen y und z aufgespannten Ebene orientiert ist, wobei die x-Achse senkrecht auf dieser Schnittebene steht (siehe Fig. 2).

Alle in den Figuren dargestellten Dimensionen, Radien und Größenverhältnisse sind lediglich exemplarisch zu verstehen und stark übertrieben dargestellt, um die einzelnen Bereiche und Abschnitte des Stabmessers und insbesondere die erfindungsgemäßen Fasen sichtbar zu machen.

Das Stabmesser 2 hat eine Spanfläche 4. Das Stabmesser 2 hat eine Freifläche 6. Das Stabmesser 2 hat eine geschliffene Spanflächenfacette 8. Die Spanfläche 4 und die Freifläche 6 sind ebenfalls geschliffen. Das Stabmesser 2 hat eine geschliffene Freiflächenfacette 10. Das Stabmesser 2 hat eine Schneide 12.

Die Spanfläche 4 grenzt an die Spanflächenfacette 8 an. Die Spanfläche 4 und die Spanflächenfacette 8 laufen in einer ersten Kante 5 zusammen - wobei die erste Kante 5 eine definiere Abgrenzung der Spanfläche 4 zur Spanflächenfacette 8 ausbildet.

Die Freifläche 6 grenzt an die Freiflächenfacette 10 an. Die Freifläche 6 und die Freiflächenfacette 10 laufen in einer zweiten Kante 7 zusammen - wobei die zweite Kante 7 eine definiere Abgrenzung der Freifläche 6 zur Freiflächenfacette 10 ausbildet.

An dem Stabmesser 2 ist zusätzlich zur Spanflächenfacette 8 eine geschliffene Spanflächenfase 14 vorgesehen. Die Spanflächenfase 14 grenzt mit einer ersten Seite 16 an die Spanflächenfacette 8 an. Die Spanflächenfase 14 definiert auf einer der Spanflächenfacette 8 abgewandten zweiten Seite 18 die Schneide 12.

Die Spanflächenfacette 8 und die Spanflächenfase 14 laufen in einer dritten Kante 9 zusammen - wobei die dritte Kante 9 eine definiere Abgrenzung der Spanflächenfacette 8 zur Spanflächenfase 14 ausbildet.

Die Spanflächenfase 14 weist in einer Richtung senkrecht zur Schneide 12 betrachtet eine geringere Breite b1 auf, als die Spanflächenfacette 8, deren in dieser Richtung gemessene Breite b2 mehr als das Dreifache der Breite b1 der Spanflächenfase 14 beträgt.

Die Breite b1 der Spanflächenfase 14 beträgt ca. 100 Mikrometer.

Eine Neigung der Spanflächenfase 14 relativ zur Spanfläche 4 ist durch einen relativen Spanflächenfasenneigungswinkel a1 definiert. Der Spanflächenfasenneigungswinkel a1 beträgt vorliegend 20°. Der Spanflächenfasenneigungswinkel a1 wird relativ zu einer gedachten Verlängerung der Spanfläche 4 und einer die Enden der Spanflächenfase 14 durchdringenden Ebene gemessen, wie in Fig. 2 gezeigt.

Die Spanflächenfacette 8 ist im Querschnitt betrachtet konkav und durch einen Radius R1 definiert.

Die Freiflächenfacette 10 ist im Querschnitt betrachtet konkav und durch einen Radius R2 definiert.

Die Spanflächenfase 14 im Querschnitt betrachtet konkav und durch einen Radius R3 definiert. Der Radius R3 ist im Verhältnis zur Breite b1 derart groß, dass die Spanflächenfase 14 im Querschnitt geradlinig erscheint. Gemäß alternativer Ausgestaltungen kann die Spanflächenfase 14 im Querschnitt betrachtet geradlinig ausgeführt sein.

Wie in Fig. 1 dargestellt, erstreckt sich die Spanflächenfase 14 entlang einer Hauptschneide 20, entlang einer Kopfschneide 22 und entlang einer Nebenschneide 24 des Stabmessers 2.

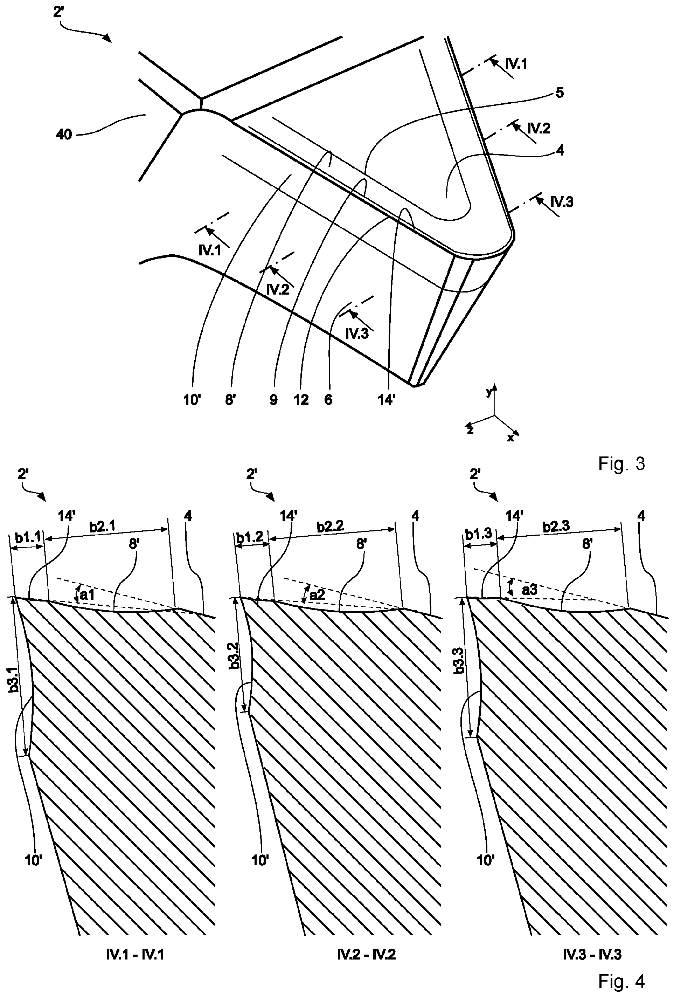

Die Figuren 3 und 4 zeigen ein zweites erfindungsgemäßes Stabmesser 2'. Zur Vermeidung von Wiederholungen wird nachfolgend lediglich auf die Unterschiede zu dem voranstehend beschriebenen Ausführungsbeispiel eingegangen, wobei gleichen Merkmalen gleiche Bezugszeichen zugeordnet werden.

Das Stabmesser 2' unterscheidet sich dadurch vom Stabmesser 2, dass das Stabmesser 2' eine Spanflächenfase 14' aufweist, deren Breite und Winkel sich entlang der Schneide 12 betrachtet ändert. Dies ist exemplarisch und schematisch anhand der teilweisen Schnittdarstellungen gemäß Schnitt IV.1 - IV.1, Schnitt IV.2 - IV.2 und Schnitt IV.3 - IV.3 gezeigt, die analog zu Fig. 2 in teilgeschnittenen Darstellungen gemäß Fig. 4 gezeigt sind.

Dabei gilt für die relativen Winkel a1, a2, a3, dass a1 < a2 < a3 ist. Der Winkel a1 ist demnach kleiner als der Winkel a2 und der Winkel a2 ist kleiner als der Winkel a3.

Weiter gilt, dass die Breite b1.1 größer ist als die Breite b1.2. und die Breite b1.2 ist größer als die Breite 1.3. Weiterhin variieren die Breiten b2.1, b2.2 und b2.3 der Spanflächenfacette 8' entlang der Schneide 12 betrachtet. Die Dimensionen und Relationen der Breiten und Winkel sind exemplarisch und schematisch zu verstehen und sollen lediglich veranschaulichen, dass die Geometrie der Spanflächenfase 14' entlang der Schneide variieren kann. Dies gilt gleichermaßen für die Geometrie der Spanflächenfacette 8' des Stabmessers 2'.

Weiter kann auch die Freiflächenfacette 10' eine entlang der Schneide 12 betrachtet eine variierende Breite aufweisen, wie exemplarisch für die Breiten b3.1, b3.2 und b3.3 gezeigt.

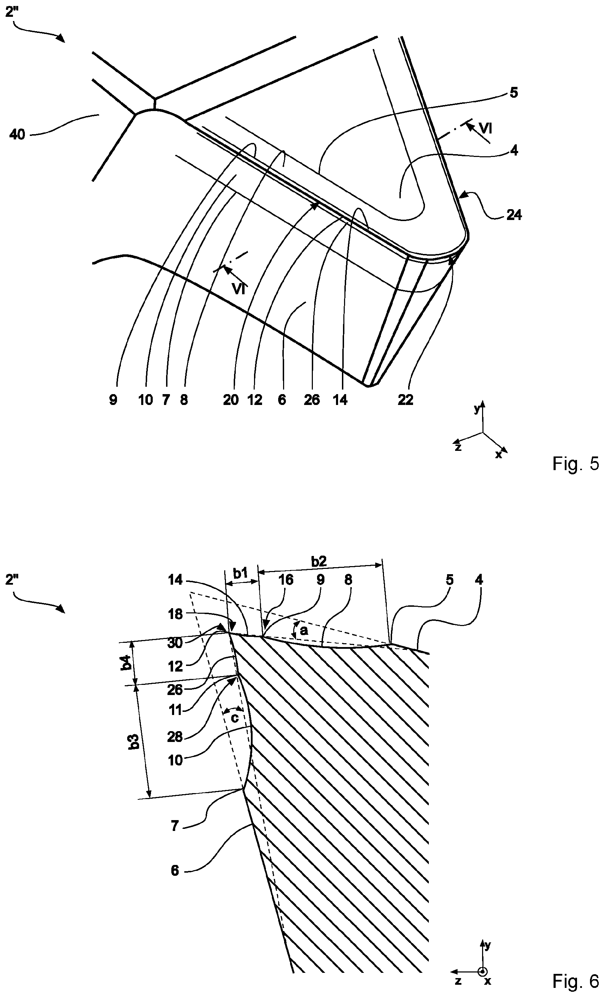

Die Figuren 5 und 6 zeigen ein drittes erfindungsgemäßes Stabmesser 2". Zur Vermeidung von Wiederholungen wird lediglich auf die Unterschiede zu dem ersten Ausführungsbeispiel eingegangen, wobei gleichen Merkmalen gleiche Bezugszeichen zugeordnet werden.

Das Stabmesser 2" unterscheidet sich dadurch vom Stabmesser 2, dass das Stabmesser 2" eine Freiflächenfase 26 aufweist.

Die Freiflächenfase 26 grenzt mit einer ersten Seite 28 an die Freiflächenfacette 10 an.

Die Freiflächenfase 26 definiert mit einer der Freiflächenfacette 10 abgewandten zweiten Seite 30 die Schneide 12.

Die Freiflächenfase 26 ist relativ zur Freifläche 6 geneigt, und zwar um einen Freiflächenfasenneigungswinkel c.

Die Freiflächenfase 26 und Freiflächenfacette 10 laufen in einer vierten Kante 11 zusammen - wobei die vierte Kante 11 eine definiere Abgrenzung der Freiflächenfase 26 zur Freiflächenfacette 10 ausbildet.

Die Freiflächenfase 26 weist in einer Richtung senkrecht zur Schneide 12 betrachtet eine geringere Breite b4 auf als die Freiflächenfacette 10, deren Breite b3 mindestens dem Dreifachen der Breite b4 entspricht. Die Freiflächenfase 26 weist eine Breite b4 von mehr als 50 Mikrometer und weniger als 200 Mikrometer auf.

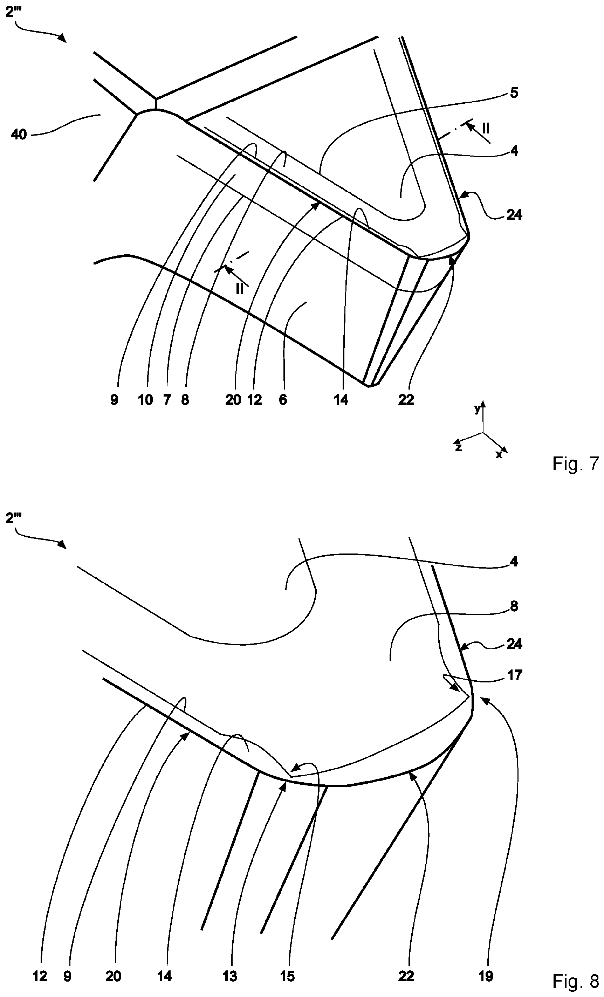

Die Figuren 7 und 8 zeigen ein viertes erfindungsgemäßes Stabmesser 2‴. Zur Vermeidung von Wiederholungen wird lediglich auf die Unterschiede zu dem ersten Ausführungsbeispiel eingegangen, wobei gleichen Merkmalen gleiche Bezugszeichen zugeordnet werden. Fig. 8 ist eine Ausschnittvergrößerung der Fig. 7.

Die Spanflächenfase 14 weist in einem Eckbereich 13 der Schneide 12, d.h. in einem Übergang der Hauptschneide 20 zur Kopfschneide 22, einen Spanbrecher 15 auf, der durch eine lokale Veränderung der Geometrie der Spanflächenfase 14 gebildet ist. So wird die Spanflächenfase 14 in Richtung des Eckbereichs 13 zunächst verbreitert und läuft dann verjüngt zu. Der Spanbrecher 15 bewirkt ein Aufreißen und/oder Vermeiden L- oder U-förmiger Mehrflankenspäne. Ein solcher Spambrecher 17 kann ebenfalls in einem Eckbereich 19, d.h. einem Übergang der Kopfschneide 22 zur Nebenschneide 24, ausgebildet sein.

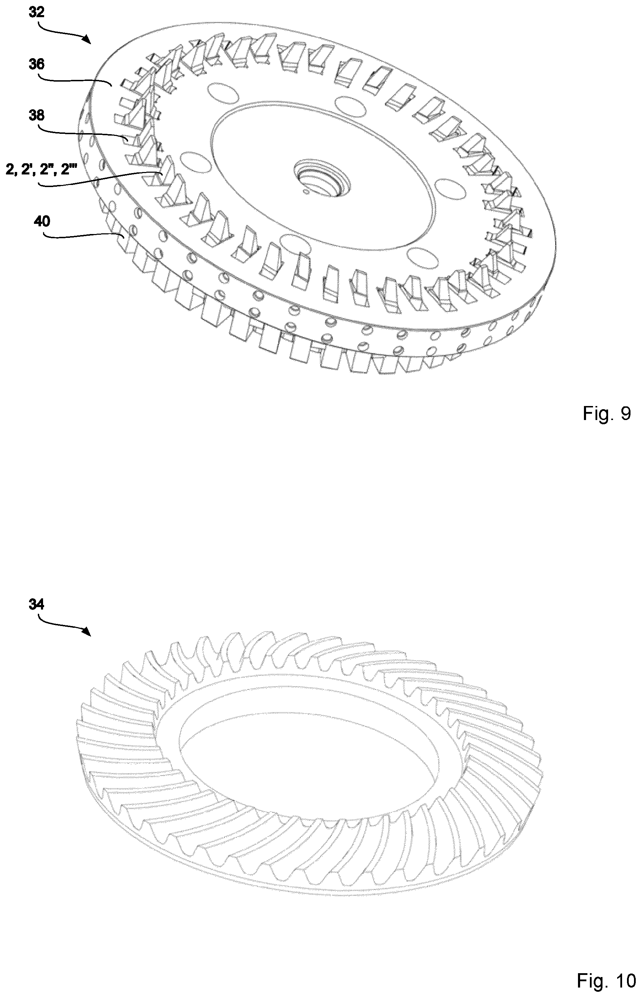

Fig. 9 zeigt einen Messerkopf 32 zur Fertigung einer Kegelradverzahnung 34 (Fig. 10).

Der Messerkopf 32 gemäß Fig. 9 hat einen Grundkörper 36, der eine Mehrzahl von Messerschächten 38 aufweist. Die Messerschächte 38 sind zur Aufnahme von Stabmessern eingerichtet, wie z.B. die erfindungsgemäß beschriebenen Stabmesser 2, 2', 2", 2‴.

Jedes der Stabmesser 2, 2', 2", 2‴ sitzt jeweils in einem zugeordneten Messerschacht 36. Dabei ragt ein Messerschaft 40 eines jeweiligen Stabmessers 2, 2', 2", 2‴ in den Messerschacht 36 bzw. je nach Länge, durchdringt diesen, und ist lösbar in dem jeweiligen Messerschacht 38 geklemmt, z.B. mittels einer Madenschraube und/oder einem Druckstück.

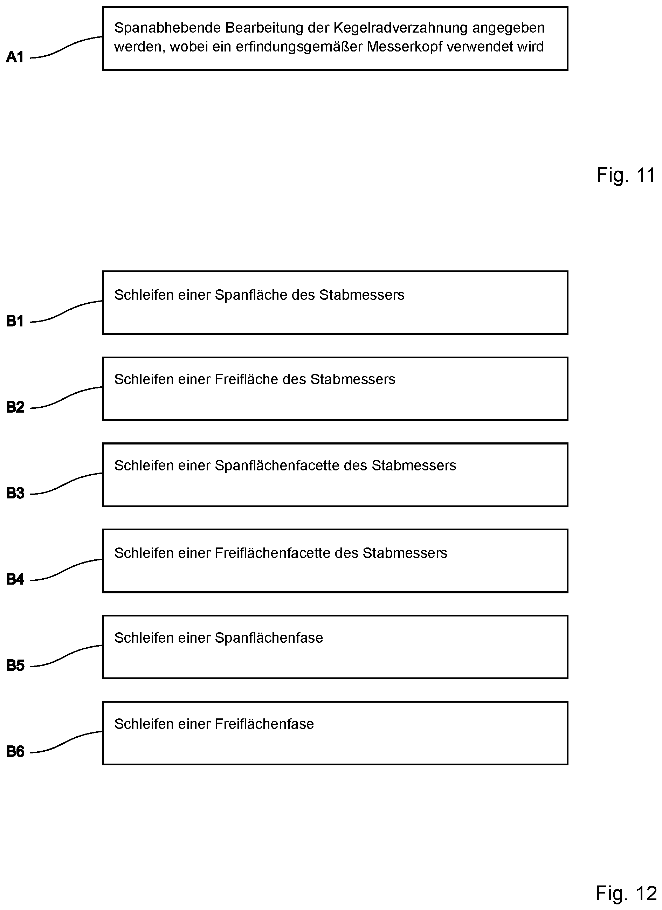

Erfindungsgemäß kann ein Verfahren zur Herstellung einer Kegelradverzahnung durch spanabhebende Bearbeitung der Kegelradverzahnung angegeben werden, wobei ein erfindungsgemäßer Messerkopf 32 verwendet wird, wie in Fig. 11 durch Verfahrensschritt A1 gezeigt.

Erfindungsgemäß kann ein Verfahren zum Schleifen eines Stabmessers angegeben werden, mit den folgende Verfahrensschritten, wobei die Nummerierung keine festgelegte Reihenfolge der Verfahrensschritte vorgibt (Fig. 12):
B1 Schleifen einer Spanfläche des Stabmessers;
B2 Schleifen einer Freifläche des Stabmessers;
B3 Schleifen einer Spanflächenfacette des Stabmessers, wobei die Spanfläche an die Spanflächenfacette angrenzt;
B4 Schleifen einer Freiflächenfacette des Stabmessers, wobei die Freifläche an die Freiflächenfacette angrenzt;
B5 Schleifen einer Spanflächenfase, die an einer ersten Seite an die Spanflächenfacette angrenzt und die auf einer der Spanflächenfacette abgewandten zweiten Seite die Schneide definiert; und/oder
B6 Schleifen einer Freiflächenfase, die an einer ersten Seite an die Freiflächenfacette angrenzt und die auf einer der Freiflächenfacette abgewandten zweiten Seite die Schneide definiert.

## Patentansprüche

1. Stabmesser zur Fertigung einer Kegelradverzahnung,
- mit einer Spanfläche (4),
- mit einer Freifläche (6),
- mit einer geschliffenen Spanflächenfacette (8),
- mit einer geschliffenen Freiflächenfacette (10) und
- mit einer Schneide (12),
- wobei die Spanfläche (4) an die Spanflächenfacette (8) angrenzt,
- wobei die Freifläche (6) an die Freiflächenfacette (10) angrenzt,
**dadurch gekennzeichnet, dass**
- eine Spanflächenfase (14) vorgesehen ist, die mit einer ersten Seite (16) an die Spanflächenfacette (8) angrenzt und die auf einer der Spanflächenfacette (8) abgewandten zweiten Seite (18) die Schneide (12) definiert,
und/oder
- eine Freiflächenfase (26) vorgesehen ist, die mit einer ersten Seite (28) an die Freiflächenfacette (10) angrenzt und die auf einer der Freiflächenfacette (10) abgewandten zweiten Seite (30) die Schneide (12) definiert.

2. Stabmesser nach Anspruch 1,
**dadurch gekennzeichnet, dass**
die Spanflächenfase (14) in einer Richtung senkrecht zur Schneide (12) betrachtet zumindest abschnittsweise eine geringere Breite (b1) aufweist als die Spanflächenfacette (8) und/oder die Spanflächenfase (14) eine Breite (b1) von mehr als 50 Mikrometer und weniger als 200 Mikrometer aufweist und/oder die Spanflächenfase (14) entlang der Schneide (12) betrachtet eine nicht konstante Breite (b1.1, b1.2, b1.2) aufweist.

3. Stabmesser nach einem der voranstehenden Ansprüche,
**dadurch gekennzeichnet, dass**
die Freiflächenfase (26) in einer Richtung senkrecht zur Schneide (12) betrachtet zumindest abschnittsweise eine geringere Breite (b4) aufweist als die Freiflächenfacette (10) und/oder die Freiflächenfase (26) eine Breite (b4) von mehr als 50 Mikrometer und weniger als 200 Mikrometer aufweist und/oder die Freiflächenfase (26) entlang der Schneide (12) eine nicht konstante Breite (b4) aufweist.

4. Stabmesser nach einem der voranstehenden Ansprüche,
**dadurch gekennzeichnet, dass**
eine Neigung der Spanflächenfase (14) relativ zur Spanfläche (4) durch einen relativen Spanflächenfasenneigungswinkel (a) definiert ist, wobei der Spanflächenfasenneigungswinkel (a) einen Betrag aufweist, ausgewählt aus einem Bereich größer oder gleich 10° und kleiner oder gleich 30°, und/oder wobei der Spanflächenfasenneigungswinkel (a) entlang der Schneide (12) betrachtet nicht konstant ist.

5. Stabmesser nach einem der voranstehenden Ansprüche,
**dadurch gekennzeichnet, dass**
eine Neigung der Freiflächenfase (26) relativ zur Freifläche (6) durch einen relativen Freiflächenfasenneigungswinkel (c) definiert ist, wobei der Freiflächenfasenneigungswinkel (c) einen Betrag aufweist, ausgewählt aus einem Bereich größer oder gleich 10° und kleiner oder gleich 30°, und/oder wobei der Freiflächenfasenneigungswinkel (c) entlang der Schneide (12) betrachtet nicht konstant ist.

6. Stabmesser nach einem der voranstehenden Ansprüche,
**dadurch gekennzeichnet, dass**
die Spanflächenfase (14) in einem Querschnitt betrachtet zumindest abschnittsweise geradlinig ist
und/oder
die Spanflächenfase (14) in einem Querschnitt betrachtet zumindest abschnittsweise konkav ist
und/oder
die Freiflächenfase (26) in einem Querschnitt betrachtet zumindest abschnittsweise geradlinig ist
und/oder
die Freiflächenfase (26) in einem Querschnitt betrachtet zumindest abschnittsweise konkav ist.

7. Stabmesser nach einem der voranstehenden Ansprüche,
**dadurch gekennzeichnet, dass**
die Spanflächenfacette (8) in einem Querschnitt betrachtet zumindest abschnittsweise geradlinig ist
und/oder
die Spanflächenfacette (8) in einem Querschnitt betrachtet zumindest abschnittsweise konkav ist
und/oder
die Freiflächenfacette (10) in einem Querschnitt betrachtet zumindest abschnittsweise geradlinig ist
und/oder
die Freiflächenfacette (10) in einem Querschnitt betrachtet zumindest abschnittsweise konkav ist.

8. Messerkopf zur Fertigung einer Kegelradverzahnung,
mit einem Grundkörper (36), der eine Mehrzahl von Messerschächten (38) aufweist,
mit einer Mehrzahl von Stabmessern (2, 2', 2", 2"'), wobei jedes der Stabmesser (2, 2', 2", 2‴) jeweils in einem zugeordneten Messerschacht (38) sitzt,
**dadurch gekennzeichnet, dass**
die Stabmesser (2, 2', 2", 2‴) gemäß einem der voranstehenden Ansprüche ausgebildet sind.

9. Verfahren zur Herstellung einer Kegelradverzahnung durch spanabhebende Bearbeitung der Kegelradverzahnung, wobei ein Messerkopf gemäß Anspruch 8 verwendet wird.

10. Verfahren zum Schleifen eines Stabmessers, mit den Verfahrensschritten:
- Schleifen einer Spanfläche (4) des Stabmessers (2, 2', 2", 2‴),
- Schleifen einer Freifläche (6) des Stabmessers (2, 2', 2", 2‴),
- Schleifen einer Spanflächenfacette (8) des Stabmessers (2, 2', 2", 2‴),
- Schleifen einer Freiflächenfacette (10) des Stabmessers (2, 2', 2", 2‴),
- wobei die Spanfläche (4) an die Spanflächenfacette (8) angrenzt,
- wobei die Freifläche (6) an die Freiflächenfacette (10) angrenzt,
**gekennzeichnet durch**
- Schleifen einer Spanflächenfase (14), die mit einer ersten Seite (16) an die Spanflächenfacette (8) angrenzt und die auf einer der Spanflächenfacette (8) abgewandten zweiten Seite (18) die Schneide (12) definiert,
und/oder
- Schleifen einer Freiflächenfase (26), die an einer ersten Seite (28) an die Freiflächenfacette (10) angrenzt und die auf einer der Freiflächenfacette (10) abgewandten zweiten Seite (30) die Schneide (12) definiert.
